# FASCICULE DE BREVET EUROPEEN

(11) **EP 3 134 628 B1**
(45) Date de publication et mention de la délivrance du brevet: **06.05.2020**
(21) Numéro de dépôt: 15723828.8
(22) Date de dépôt: 03.04.2015
(51) Int. Cl.: F02B 29/04, F02M 26/00, F28F 9/02, F28D 9/00, F16J 15/08, F28D 21/00

(54) **ÉCHANGEUR DE CHALEUR POUR VÉHICULE AUTOMOBILE**
WÄRMETAUSCHER FÜR EIN KRAFTFAHRZEUG
HEAT EXCHANGER FOR A MOTOR VEHICLE

(30) Priorité: 04.04.2014 FR 1453009
(43) Date de publication de la demande: 01.03.2017
(73) Titulaire: Valeo Systèmes Thermiques, 78320 Le Mesnil-Saint-Denis (FR)
(72) Inventeur: DEVEDEUX, Sébastien, 78000 Versailles (FR); ODILLARD, Laurent, 72390 Le Luart (FR); FERLAY, Benjamin, 78720 Cernay La Ville (FR)
(74) Mandataire: Neuviale, Bertrand
(86) Numéro de dépôt international: PCT/EP2015/000724
(87) Numéro de publication internationale: WO 2015/149951

(56) Documents cités:
- EP-A1- 1 830 048
- WO-A1-2012/159730
- WO-A1-2013/078531
- DE-A1- 4 313 505
- DE-A1-102005 039 201
- US-A1- 2013 133 866

## Description

L'invention concerne un échangeur de chaleur, notamment pour l'alimentation en air des moteurs de véhicules automobiles, et plus particulièrement les moteurs dont l'air d'alimentation provient d'un compresseur ou d'un turbocompresseur délivrant de l'air dit de suralimentation. Un échangeur divulguant les caractéristiques du préambule de la revendication 1 est connu de WO 2012/159730.

Dans la suite, on entendra par air d'alimentation, ou de suralimentation, aussi bien de l'air provenant du seul circuit d'admission d'air du moteur qu'un mélange d'air et de gaz d'échappement récupéré en sortie du moteur, conformément au système généralement connu sous l'acronyme d'EGR (« Exhaust Gas Recirculation »).

Afin d'augmenter la densité de l'air d'admission d'un moteur turbocompressé, il est connu de refroidir l'air de suralimentation sortant du compresseur au moyen d'un échangeur de chaleur qui est aussi appelé refroidisseur d'air de suralimentation ou RAS en abrégé.

Un refroidisseur d'air de suralimentation comporte au moins un faisceau d'échange de chaleur. Ce faisceau d'échange de chaleur comporte un empilement de plaques formant alternativement des canaux de circulation pour l'air suralimenté à refroidir et des canaux pour la circulation du liquide de refroidissement de l'échangeur.

Cet échangeur est généralement intégré dans le collecteur d'admission du moteur à combustion interne. L'efficacité de l'échange thermique dépend fortement du niveau de fuite entre le faisceau et le collecteur. Une mauvaise étanchéité à ce niveau entraîne une baisse de performance significative de l'échangeur. De plus, il est primordial de garantir un positionnement du faisceau précis et reproductible dans le collecteur afin de garantir cette étanchéité.

A cet effet, l'invention concerne un échangeur de chaleur entre un premier et un second fluide, notamment pour l'alimentation en air d'un moteur thermique de véhicule automobile, comportant au moins un faisceau d'échange de chaleur parcouru par le premier fluide et un boîtier dans lequel ledit faisceau d'échange de chaleur est logé de façon à être traversé par le second fluide.

Selon l'invention, ledit échangeur de chaleur possède les caractéristiques de la revendication 1. Autrement dit, le jeu prévu entre le faisceau et le boîtier est configuré pour entrainé une compression du joint d'étanchéité qui assure alors une étanchéité au second fluide. Grâce audit joint, on empêche un passage direct du second fluide d'une entrée vers une sortie du boîtier sans passer par le faisceau d'échange de chaleur. On évite de la sorte qu'une fraction du second fluide sorte de l'échangeur sans avoir été refroidi. Avantageusement, le boîtier est configuré pour être relié à des tubulures d'admission d'air d'un moteur. Ledit échangeur de chaleur sert notamment de refroidisseur d'air de suralimentation du moteur.

Selon d'autres caractéristiques de l'invention qui pourront être prises seules ou en combinaison :
- ledit joint est situé au niveau d'une face de sortie du faisceau,
- ledit faisceau d'échange de chaleur est parallélépipédique rectangle,
- ledit faisceau d'échange de chaleur est fermé sur la grande face opposée à ladite bride frontale par une plaque dite plaque structurelle,
- le ou lesdits rebords font saillie à partir d'un sommet des plaques,
- le ou lesdits rebords sont disposés le long d'une même direction parallèle à une direction d'empilement des plaques, notamment à un bord d'une face longitudinale d'entrée ou de sortie du second fluide du faisceau, en particulier un bord de la face longitudinale de sortie du second fluide du faisceau,
- ladite plaque structurelle comporte au moins un rebord passant par un plan contenant le ou lesdits rebords des plaques,
- ledit joint d'étanchéité a une section en U, notamment régulière, apte à s'engager sur le ou lesdits rebords de plaque de faisceau et/ou ledit rebord de plaque structurelle,
- ledit joint d'étanchéité est configuré pour s'étendre en continuité sur le ou lesdits rebords de plaque de faisceau et/ou ledit rebord de plaque structurelle, notamment sur chacune des faces latérales et plaque structurelle du faisceau,
- ledit joint d'étanchéité comporte une lèvre, notamment une lèvre externe profilée,
- ladite lèvre externe est apte à être appliquée, notamment comprimée, contre une paroi du boîtier, en sorte de conférer ladite étanchéité au second fluide entre le faisceau et le boîtier,
- ledit joint d'étanchéité est un élément thermoplastique ou élastomère,
- ledit joint d'étanchéité est apte à être fixé, notamment clippé, sur le ou lesdits rebords de plaque de faisceau et/ou ledit rebord de plaque structurelle,
- ledit joint d'étanchéité est conformé en U pour s'étendre le long desdites faces latérales du faisceau et la plaque structurelle,
- ledit joint d'étanchéité est pourvu de deux zones charnières, une à chacune des extrémités de la branche principale du U correspondant à la plaque structurelle, lesdites zones charnières étant aptes à élargir l'ouverture du U et à la ramener à un profil initial pour permettre un montage facile du joint sur le faisceau,
- ledit boîtier comporte un logement pour ledit joint d'étanchéité,
- ledit logement est conformé dans un profil de nervure permettant le montage coulissant du faisceau équipé du joint dans le boîtier,
- ledit logement est conformé rigide pour permettre une tenue mécanique du faisceau dans le boîtier, notamment en jouant le rôle de raidisseur, ce qui supprime les jeux et le porte à faux dans la liaison du faisceau au boîtier et amortit les vibrations, ainsi les modes des fréquences de vibration du faisceau sont augmentés et les amplitudes des vibrations sur chaque mode sont atténuées,
- le joint comporte un talon support coopérant avec ledit logement, notamment pour permettre le maintien du faisceau dans le boîtier.

Ledit faisceau est fixé au boîtier au moyen de la bride frontale, laquelle est notamment vissée au boîtier, avec interposition d'un éventuel autre joint pour éviter les fuites de second fluide en dehors du boîtier.

L'invention concerne également un module d'admission de moteur de véhicule comportant un échangeur de chaleur tel que décrit ci-dessus. D'autres avantages et caractéristiques de l'invention apparaîtront encore au regard de la description d'exemples de réalisation de l'invention et en référence aux dessins annexés, dans lesquels :
- la figure 1 est une vue schématique en perspective éclatée d'un échangeur de chaleur selon un mode de réalisation de l'invention,
- la figure 2 est une vue schématique en perspective du faisceau d'échange de chaleur et du joint d'étanchéité, en cours de montage, de l'échangeur de chaleur selon la figure 1,
- la figure 3 est une vue agrandie en perspective du joint d'étanchéité, montrant en particulier sa section transversale,
- la figure 4 est une vue en élévation du faisceau d'échange de chaleur, de l'échangeur de la figure 1,
- la figure 5 est une vue en coupe partielle selon la coupe A-A de la figure 4,
- la figure 6 montre de façon agrandie un détail de la figure 4 au niveau d'une zone charnière du joint d'étanchéité,
- Les figures 7 et 8 sont des vues du faisceau d'échange de chaleur montrant des modes de montage du joint d'étanchéité,
- la figure 9 est une vue en coupe partielle analogue à la figure 5 montrant une variante de réalisation,
- la figure 10 est une vue en coupe partielle du joint d'étanchéité monté entre le faisceau et le boîtier, sur un rebord de plaque structurelle du faisceau.

En référence aux dessins, aux figues 1 et 2 en particulier, l'invention concerne un échangeur de chaleur 1, notamment pour une alimentation en air d'un moteur thermique de véhicule automobile, comme ici. L'échangeur permet un échange de chaleur entre un premier fluide F1 et un second fluide F2. Dans l'application illustrée, le premier fluide F1 est un liquide de refroidissement, notamment de l'eau glycolée, et le second fluide F2 est l'air de suralimentation, à refroidir. Cet échangeur 1 forme ainsi, par exemple, un refroidisseur d'air de suralimentation intégré dans un collecteur 3 d'admission du moteur à combustion interne.

Ledit échangeur 1 comporte au moins un faisceau 5 d'échange de chaleur parcouru par le premier fluide F1 et un boîtier 7 dans lequel ledit faisceau 5 d'échange de chaleur est logé de façon à être traversé par ledit second fluide F2.

Selon l'invention, ledit échangeur 1 de chaleur comporte au moins un joint d'étanchéité 9 disposé entre ledit faisceau 5 d'échange de chaleur et ledit boîtier 7 pour limiter un contournement du faisceau 5 par le second fluide F2.

Grâce à l'invention, on empêche un passage du second fluide F2 entre le faisceau 5 d'échange de chaleur et le boîtier 7. Une telle caractéristique permet de fortement augmenter le rendement thermique de l'échangeur. En effet, en raison de la forte densité du faisceau et donc de la perte de charge conséquente sur le second fluide F2 dans le faisceau, une fuite même minime entre le boîtier et le faisceau entraînerait un débit important de gaz non refroidi à travers l'échangeur.

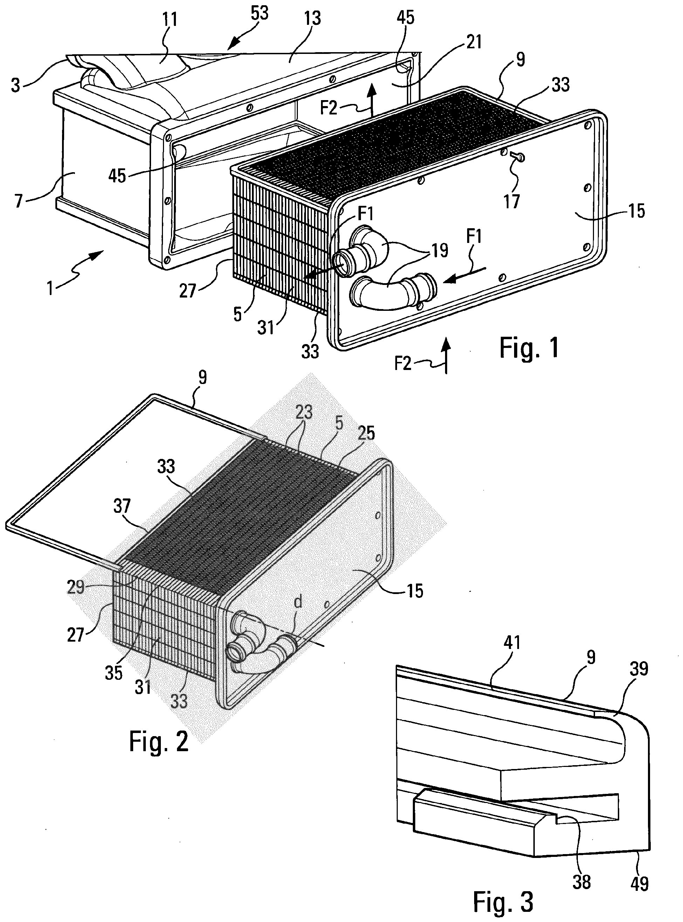

Ainsi qu'il est visible à la figure 1, le boîtier 7 est ici configuré pour être relié à des tubulures 11 d'admission du moteur. Il comporte notamment une proéminence ou collecteur de sortie13 sur l'une de ses grandes faces, par laquelle il est relié auxdites tubulures 11 d'admission. Un collecteur d'entrée du second fluide est situé au niveau de la face opposée.

Ledit boîtier 7 est fermé sur l'une de ses faces par une plaque dite bride frontale 15, à laquelle ledit faisceau 5 d'échange de chaleur est fixé de façon étanche, notamment par brasage. Cette bride frontale 15 est fixée ici par des vis 17 au boîtier 7. Un autre joint d'étanchéité pourra être utilisé entre ladite bride 15 et ledit boîtier 7 pour éviter des fuites de second fluide vers l'extérieur. Ladite bride 15 comporte en outre des conduits 19 d'entrée et sortie du premier fluide du faisceau d'échange de chaleur. Il est à noter que cette bride frontale 15 ferme une ouverture 21 du boîtier destinée au passage du faisceau 5 d'échange de chaleur, lors de son montage dans le boîtier.

Ledit faisceau 5 d'échange de chaleur est ici parallélépipédique rectangle. Il comporte un empilement de plaques 23 formants alternativement des canaux de circulation pour le premier et le second fluide. Les plaques sont, par exemple, assemblées par paire pour former des canaux de circulation pour le premier fluide. Ici lesdits canaux sont configurés en U et le premier fluide entre et sort des paires de plaques au niveau d'orifices situés d'un même côté 31 du faisceau 5. Les orifices des paires de plaques communiquent entre eux de paire en paire afin de former un collecteur d'entrée et un collecteur de sortie pour le premier fluide, communiquant respectivement avec les conduits 19 de la bride frontale 15. Lesdites plaques sont formées, par exemple, par emboutissage, empilées puis brasées entre elles. L'échange de chaleur entre les plaques 23 et le second fluide se fait en partie par l'intermédiaire de turbulateurs 25 situés entre les paires de plaques.

Ledit faisceau 5 d'échange de chaleur est ici fermé sur une grande face, à l'opposé de la ladite bride frontale 15, par une plaque dite plaque structurelle 27. Cette plaque 27 est par exemple fixée au faisceau par brasage.

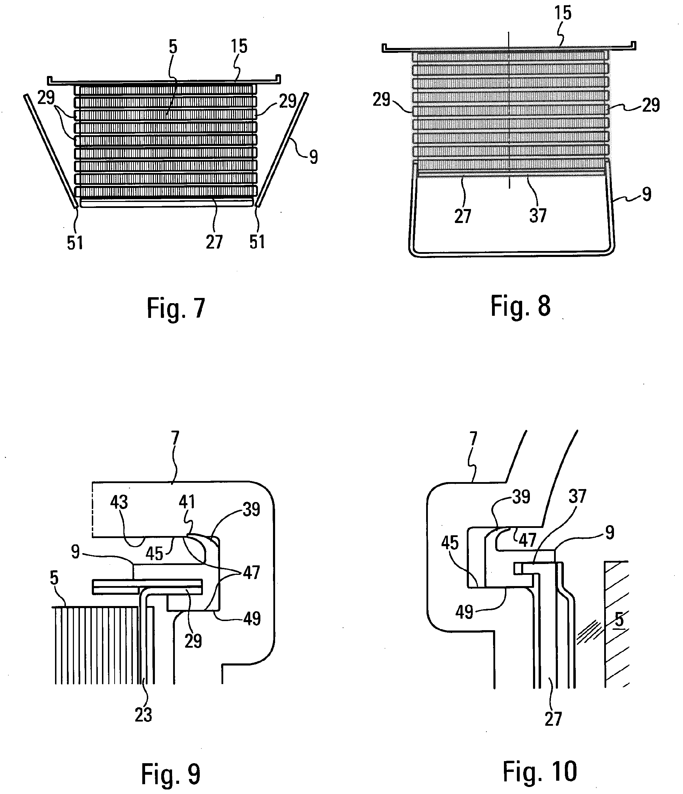

Les plaques 23 pourront présenter chacune un rebord 29 ménagé en saillie de leur plan, notamment perpendiculaire à leur plan. Le rebord 29 est ici perpendiculaire aux faces latérales 31 du faisceau, à savoir les faces adjacentes aux faces longitudinales 33 d'entrée et de sortie de l'air du faisceau. Ce ou ces rebords 29, particulièrement visibles aux figures 7 à 9, sont préférentiellement agencés en une pluralité de rebords 29 identiques, espacés régulièrement l'un de l'autre au niveau des paires de plaques.

Le ou lesdits rebords 29 sont avantageusement disposés le long d'une même direction parallèle à la direction d'empilement des plaques. Ils sont situés, par exemple, le long d'un bord 35 de face longitudinale 33 du faisceau, ici la face longitudinale de sortie du second fluide.

Autrement dit, lesdits rebords 29 forment une ligne d qui est ici une ligne de bord 35 de ladite face longitudinale 33 de sortie du second fluide du faisceau.

Lesdits rebords 39 pourront être prolongés le long de ladite face longitudinale 33 afin de venir au contact des turbulateurs 25. Ils forment ainsi un écran empêchant le passage du second fluide au niveau de zones des plaques non revêtues desdits turbulateurs, ce qui favorise l'échange de chaleur.

Ladite plaqué structurelle 27 comporte également au moins un rebord 37, ici un rebord régulier 37, figure 10, passant par un plan contenant le ou lesdits rebords 29 des plaques 23. Ce rebord 37 est rectiligne, perpendiculaire au plan de la plaque structurelle 27.

Ledit joint d'étanchéité 9 est monté le long dudit ou desdits rebords 29 de plaque de faisceau et dudit rebord 37 de plaque structurelle, en étant fixé, par exemple collé, à ces derniers.

Avantageusement, ledit joint d'étanchéité 9 est monté sur lesdits rebords 29 de plaque de faisceau et sur ledit rebord 37 de plaque structurelle, sur trois côtés du faisceau 5, comme ici. Il est notamment configuré avec un profil en U, figures 7 et 8, pour s'étendre longitudinalement en continuité sur lesdits rebords 29 de plaque de faisceau et ledit rebord 37 de plaque structurelle, sur chacune desdites faces latérales 31 et plaque structurelle 27 du faisceau.

De plus, ledit joint d'étanchéité 9 a une section en U, régulière, figure 3, apte à permettre au joint de s'engager sur ou recevoir ledit rebord 29 de plaque de faisceau et ledit rebord 37 de plaque structurelle. L'engagement peut être relativement serré en sorte de retenir le joint, après l'engagement. Les profils des rebords 29 et 37 sont ici identiques mais ils pourront être différents, le joint d'étanchéité 9 ayant un profil complémentaire.

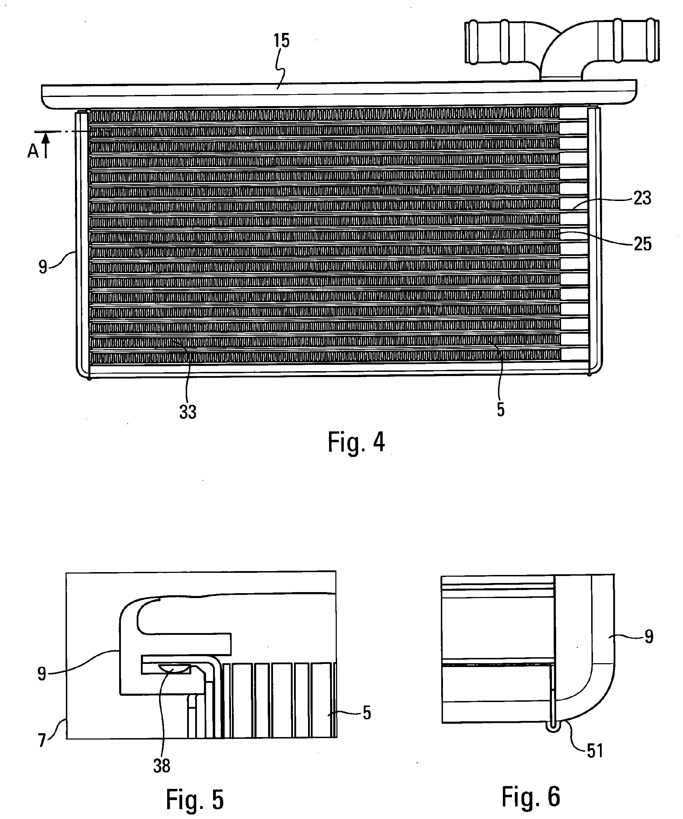

De préférence, ledit joint d'étanchéité 9 est apte à être fixé, notamment clippé par un crochet 38 du U, tel que cela apparait à la figure 5, sur ledit rebord 29 de plaque de faisceau et ledit rebord 37 de plaque structurelle, après son engagement sur ces derniers.

Ledit joint d'étanchéité 9 comporte, figures 9 et 10, une lèvre 39 externe profilée, ici selon un profil longitudinal de section arrondie et effilée à l'extrémité 41.

Ladite lèvre externe 39 est apte à être appliquée, notamment comprimée, contre une paroi 43 du boîtier, en sorte de conférer ladite étanchéité au second fluide entre le faisceau et le boîtier.

Plus précisément, le joint 9 est logé dans un évidement 45 profilé du boîtier, complémentaire du joint. L'évidement 45 présente ici une section rectangulaire, laquelle accueille le joint 9, notamment de façon comprimée entre deux faces latérales opposées 47 de l'évidement. Le joint 9 comporte notamment une partie en forme de talon 49 à l'opposé de la lèvre 39, ce qui lui permet de maintenir le faisceau 5 solidairement au boîtier 7.

Ledit joint d'étanchéité 9 est avantageusement un élément thermoplastique ou élastomère, notamment déformable selon une certaine tolérance pour supporter ladite compression d'étanchéité. Cette tolérance avant et après compression est par exemple comprise 0,1 mm et 0,25 mm.

Comme mentionné précédemment, ledit joint d'étanchéité 9 est conformé en U pour s'étendre le long desdites faces latérales 31 et la plaque structurelle 27 du faisceau. A chacune des extrémités de la branche principale du U, correspondant à la plaque structurelle 27, le joint d'étanchéité 9 est pourvu d'une zone charnière 51, voir les figures 6 et 7, lesdites deux zones charnières 51 étant aptes à accroître l'ouverture du U au montage du joint sur le faisceau et à la ramener à sa configuration initiale du U, à l'engagement sur lesdits rebords 29, 37. Cette disposition facilite le montage du joint sur le faisceau. Le joint peut encore être glissé sur les rebords 29, figure 8, jusqu'à l'engagement sur le rebord 37 en fin de montage du joint.

Ledit boîtier 7 comporte un logement pour ledit joint d'étanchéité 9, lequel est ici ledit évidement 45. Ce logement 45 est conformé dans un profil de nervure, en particulier dans ladite section rectangulaire, pour permettre le montage coulissant, depuis l'ouverture 21, du faisceau 5 équipé du joint 9 dans le boîtier 7.

Ledit logement 45 est conformé rigide pour permettre une tenue mécanique du faisceau 5 dans le boîtier 7, notamment en jouant le rôle de raidisseur. Cette disposition permet de supprimer les jeux et le porte à faux dans la liaison du faisceau au boîtier et amortit les vibrations. De cette manière, les modes des fréquences de vibration du faisceau et par là de l'échangeur 1, sont augmentés et les amplitudes des vibrations sur chaque mode sont atténuées. La fiabilité de l'échangeur et son fonctionnement silencieux sont améliorés.

Le procédé de montage d'un tel échangeur de chaleur 1 est à présent décrit. Le procédé comprend les étapes suivantes :
- le montage dudit joint d'étanchéité 9 sur le faisceau 5 d'échange de chaleur, notamment monté sur le ou lesdits rebords 29 de plaque de faisceau et sur le rebord 37 de plaque structurelle, et
- le montage du faisceau 5 équipé du joint 9 dans le boîtier 7, en particulier en coulissement sur ledit évidement 45 dans le boîtier 7 depuis son ouverture 21.

Ledit faisceau 5 est ensuite fixé au boîtier 7 au moyen de la bride frontale 15, ici vissée sur un bord d'ouverture 21 du boîtier.

L'invention concerne également un module 53 d'admission de moteur de véhicule comportant un échangeur de chaleur tel que décrit ci-dessus et visible en partie à la figure 1.

L'invention apporte ainsi un échangeur de chaleur, notamment refroidisseur d'air de suralimentation de moteur de véhicule, qui est performant, silencieux et fiable.

## Revendications

1. Echangeur de chaleur (1) entre un premier et un second fluide, notamment pour l'alimentation en air d'un moteur thermique de véhicule automobile, comportant au moins un faisceau (5) d'échange de chaleur comportant des plaques (23) de circulation de fluide empilées l'une sur l'autre, ledit faisceau étant parcouru par le premier fluide et un boîtier (7) dans lequel ledit faisceau (5) d'échange de chaleur est logé de façon à être traversé par le second fluide, ledit boîtier (7) étant fermé sur l'une de ses faces par une plaque dite bride frontale (15), à laquelle ledit faisceau (5) d'échange de chaleur est fixé de façon étanche, ledit faisceau (5) présentant une grande face assujettie à ladite bride frontale (15), une grande face opposée et des faces latérales (31) reliant lesdites grandes faces, ledit échangeur de chaleur (1) comportant au moins un joint d'étanchéité (9) disposé entre ledit faisceau (5) d'échange de chaleur et ledit boîtier (7) pour limiter un contournement du faisceau (5) par le second fluide **caractérisé en ce que** ledit joint (9) s'étend le long de ladite grande face opposée à celle assujettie à la bride frontale (15) et desdites faces latérales (31), lesdites plaques (23) présentant chacune au moins un rebord (29) perpendiculaire à leur plan, le ou les rebords (29) étant disposés le long d'une même direction parallèle à une direction d'empilement desdites plaques, ledit joint d'étanchéité (9) étant monté sur le ou lesdits rebords (29) de plaque de faisceau.

2. Echangeur de chaleur (1) selon la revendication 1, dans lequel ledit joint (9) est situé au niveau d'une face de sortie du faisceau (5).

3. Echangeur de chaleur (1) selon l'une des revendications 1 ou 2, dans lequel ledit faisceau (5) d'échange de chaleur est fermé sur la grande face opposée à ladite bride frontale (15) par une plaque dite plaque structurelle (27).

4. Echangeur de chaleur (1) selon l'une des revendications précédentes, dans lequel le ou lesdits rebords (29) font saillie à partir d'un sommet des plaques (23).

5. Echangeur de chaleur (1) selon l'une des revendications précédentes dans lequel ledit faisceau (5) comporte au moins un rebord inférieur (37) passant par un plan contenant le ou lesdits rebords (29) des plaques (23) et ledit joint est en outre monté sur le rebord (37) de plaque structurelle.

6. Echangeur de chaleur (1) selon l'une des revendications précédentes, dans lequel ledit joint d'étanchéité (9) a une section en U, apte à s'engager sur le ou lesdits rebords (29) de plaque de faisceau et/ou ledit rebord (37) de plaque structurelle.

7. Echangeur de chaleur (1) selon l'une des revendications précédentes, dans lequel ledit joint d'étanchéité (9) est configuré pour s'étendre en continuité sur le ou lesdits rebords (29) de plaque de faisceau et/ou ledit rebord (37) de plaque structurelle.

8. Echangeur de chaleur (1) selon l'une quelconque des revendications précédentes, dans lequel ledit joint d'étanchéité (9) comporte une lèvre (39) externe profilée, ladite lèvre (39) étant apte à être appliquée contre une paroi (43) dudit boîtier (7).

9. Echangeur de chaleur (1) selon l'une quelconque des revendications précédentes, dans lequel ledit boîtier (7) comporte un logement (45) pour ledit joint d'étanchéité (9), ledit logement (45) étant conformé dans un profil de nervure.

10. Echangeur de chaleur (1) selon l'une quelconque des revendications précédentes dans lequel ledit joint d'étanchéité est un élément thermoplastique ou élastomère.

11. Module (53) d'admission de moteur de véhicule comportant un échangeur de chaleur (1) selon l'une quelconque des revendications 1 à 10.

## Patentansprüche

1. Wärmetauscher (1) zwischen einem ersten und einem zweiten Fluid, insbesondere für die Luftversorgung eines Verbrennungsmotors eines Kraftfahrzeugs, welcher einen Wärmetauschblock (5), welcher übereinander gestapelte Platten (23) zum Fluidumlauf umfasst, wobei der Block von dem ersten Fluid durchlaufen wird, und ein Gehäuse (7) umfasst, in welchem der Wärmetauschblock (5) derartig untergebracht ist, um von dem zweiten Fluid durchströmt zu werden, wobei das Gehäuse (7) an einer seiner Flächen durch eine Platte, so genannter Stirnflansch (15), geschlossen ist, an welchem der Wärmetauschblock (5) auf abdichtende Weise befestigt ist, wobei der Block (5) eine große, an dem Stirnflansch (15) fest gemachte Fläche, eine große, gegenüber liegende Fläche und Seitenflächen (31) aufweist, welche die großen Flächen verbinden, wobei der Wärmetauscher (1) mindestens eine zwischen dem Wärmetauschblock (5) und dem Gehäuse (7) angeordnete Dichtung (9) umfasst, um eine Umströmung des Blocks (5) durch das zweite Fluid zu begrenzen, **dadurch gekennzeichnet, dass** sich die Dichtung (9) entlang der großen Fläche, welche der an dem Stirnflansch (15) fest gemachten Fläche gegenüber liegt, und der Seitenflächen (31) erstreckt, wobei die Platten (23) jeweils mindestens einen Flansch (29) senkrecht zu ihrer Ebene aufweisen, wobei der oder die Flansche (29) entlang einer gleichen Richtung parallel zu einer Stapelrichtung der Platten angeordnet sind, wobei die Dichtung (9) an dem oder den Flanschen (29) des Plattenblocks montiert ist.

2. Wärmetauscher (1) nach Anspruch 1, bei welchem sich die Dichtung (9) im Bereich einer Austrittsfläche des Blocks (5) befindet.

3. Wärmetauscher (1) nach einem der Ansprüche 1 oder 2, bei welchem der Wärmeaustauschblock (5) an der großen, dem Stirnflansch (15) gegenüber liegenden Fläche durch eine Platte, so genannte Strukturplatte (27), geschlossen ist.

4. Wärmetauscher (1) nach einem der vorhergehenden Ansprüche, bei welchem der oder die Flansche (29) aus einem Scheitel der Platten (23) vorspringen.

5. Wärmetauscher (1) nach einem der vorhergehenden Ansprüche, bei welchem der Block (5) mindestens einen unteren Flansch (37) umfasst, welcher durch eine Ebene verläuft, welche den oder die Flansche (29) der Platten (23) enthält, und die Dichtung außerdem an dem Strukturplattenflansch (37) montiert ist.

6. Wärmetauscher (1) nach einem der vorhergehenden Ansprüche, bei welchem die Dichtung (9) einen U-förmigen Querschnitt aufweist, welcher geeignet ist, mit dem oder den Plattenblockflanschen (29) und/oder dem Strukturplattenflansch (37) in Eingriff zu gelangen.

7. Wärmetauscher (1) nach einem der vorhergehenden Ansprüche, bei welchem die Dichtung (9) dafür ausgelegt ist, um sich kontinuierlich über den oder die Plattenblockflansche (29) und/oder den Strukturplattenflansch (37) zu erstrecken.

8. Wärmetauscher (1) nach einem der vorhergehenden Ansprüche, bei welchem die Dichtung (9) eine äußere, profilierte Lippe (39) umfasst, wobei die Lippe (39) dafür geeignet ist, um gegen eine Wand (43) des Gehäuses (7) angelegt zu werden.

9. Wärmetauscher (1) nach einem der vorhergehenden Ansprüche, bei welchem das Gehäuse (7) eine Aufnahme (45) für die Dichtung (9) umfasst, wobei die Aufnahme (45) an ein Rippenprofil angepasst ist.

10. Wärmetauscher (1) nach einem der vorhergehenden Ansprüche, bei welchem die Dichtung ein thermoplastisches oder elastomeres Element ist.

11. Einlassmodul (53) für den Motor eines Fahrzeug, umfassend einen Wärmetauscher (1) nach einem der Ansprüche 1 bis 10.

## Claims

1. Heat exchanger (1) for the exchange of heat between a first and a second fluid, notably for supplying air to a motor vehicle combustion engine, comprising at least one heat exchange core bundle (5) comprising fluid circulation plates (23) stacked on one another, said core bundle having the first fluid passing through it, and a casing (7) in which said heat exchange core bundle (5) is housed so that the second fluid can pass through it, said casing (7) being closed along one of its faces by a plate referred to as the frontal flange (15), to which said heat exchange core bundle (5) is fixed in a fluidtight fashion, said core bundle (5) having a large face secured to said frontal flange (15), and an opposite large face and lateral faces (31) connecting said large faces, said heat exchanger (1) comprising at least one seal (9) placed between said heat exchange core bundle (5) and said casing (7) so as to limit the extent to which the second fluid can bypass the core bundle (5), **characterized in that** said seal (9) extends along said large face opposite to the one secured to the frontal flange (15) and along said lateral faces (31).

2. Heat exchanger (1) according to Claim 1, in which said seal (9) is situated at the level of an output face of the core bundle (5).

3. Heat exchanger (1) according to either of Claims 1 and 2, in which said heat exchange core bundle (5) is closed on the large face opposite to said frontal flange (15) by a plate referred to as a structural plate (27).

4. Heat exchanger (1) according to one of the preceding claims, in which said rims (29) project from a top of the plates (23).

5. Heat exchanger (1) according to one of the preceding claims, in which said core bundle (5) comprises at least one lower rim (37) passing through a plane containing said rim or rims (29) of the plates (23) and said seal is also mounted on the structural plate rim (37).

6. Heat exchanger (1) according to one of the preceding claims, in which said seal (9) has a U-shaped cross section able to engage over said core bundle plate rim or rims (29) and/or said structural plate rim (37) .

7. Heat exchanger (1) according to one the preceding claims, in which said seal (9) is configured to extend continuously along said core bundle plate rim or rims (29) and/or said structural plate rim (37).

8. Heat exchanger (1) according to any one of the preceding claims, in which said seal (9) comprises a profiled external lip (39), said lip (39) being able to be pressed against a wall (43) of said casing (7) .

9. Heat exchanger (1) according to any one of the preceding claims, in which said casing (7) comprises a housing (45) for said seal (9), said housing (45) being configured in a rib profile.

10. Heat exchanger (1) according to any one of the preceding claims, in which said seal is a thermoplastic or elastomer component.

11. Motor vehicle air intake module (53) comprising a heat exchanger (1) according to any one of Claims 1 to 10.
